# EUROPÄISCHE PATENTSCHRIFT

(11) **EP 1 620 228 B1**
(45) Veröffentlichungstag und Bekanntmachung des Hinweises auf die Patenterteilung: **17.01.2007**
(21) Anmeldenummer: 04727546.6
(22) Anmeldetag: 15.04.2004
(51) Int. Cl.: B23Q 7/00, B23Q 3/02, B25B 11/00, B23Q 7/14, B23Q 1/00

(54) **SCHNELLSPANNZYLINDER MIT VEREINFACHTEM AUFBAU**
QUICK-ACTION CLAMPING CYLINDER WITH A SIMPLIFIED STRUCTURE
CYLINDRE DE SERRAGE RAPIDE A MONTAGE SIMPLIFIE

(30) Priorität: 15.04.2003 DE 10317350
(43) Veröffentlichungstag der Anmeldung: 01.02.2006
(73) Patentinhaber: SSA System-Spann AG, 8032 Zürich (CH)
(72) Erfinder: STARK, Emil, A-6840 Götzis (AT)
(74) Vertreter: Riebling, Peter
(86) Internationale Anmeldenummer: PCT/EP2004/003946
(87) Internationale Veröffentlichungsnummer: WO 2004/091853

(56) Entgegenhaltungen:
- EP-A- 0 827 805
- WO-A-02/078898
- DE-A- 10 118 808

## Beschreibung

Die Erfindung betrifft einen Schnellspannzylinder mit vereinfachtem Aufbau nach dem Oberbegriff des Patentanspruchs 1. Ein eingangs genannter Schnellspannzylinder ist beispielsweise mit der auf den gleichen Erfinder zurückgehenden DE 101 18 808 A1 bekannt geworden. Bei diesem bekannten Schnellspannzylinder ist allerdings kein vereinfachter Aufbau gegeben, weil die Kugelverriegelung mit zwei gegensätzlich zueinander bewegbaren Kolben erfolgt, von denen der eine Kolben unter der Wirkung eines Federpaketes steht, während der andere (kleinere) Kolben mit einer eigenen Druckfeder verschiebbar im Zylinderraum des größeren Kolbens angetrieben ist. Bei dieser bekannten Ausführung besteht demgemäss der Nachteil, dass relativ viele bewegte Teile vorhanden sind und die Montage und der Unterhalt eines derartigen Schnellspannzylinders aufwendig ist.

Es besteht der weitere Nachteil, dass die Kraft des Schraubenfeder- oder Tellerfederpaketes lediglich im Verhältnis 1:1 in eine Einzugskraft auf den Einzugsnippel umgewandelt wird. Die Tellerfeder wirkt unmittelbar auf den größeren Kraftkolben, wobei der kleinere Kolben der Bewegung des größeren Kraftkolbens nachrückt und mit der Kraft der kleinen Feder die Kugel einwärts in Richtung auf den radial einwärts gelagerten Einzugsnippel verschiebt.

Damit besteht der Nachteil, dass, wenn eine hohe Einzugskraft am Einzugsnippel gewünscht wird, die durch schräg angreifende Verriegelungskugeln noch geschwächt wird, großvolumige Federpakete verwendet werden müssen.

Weiterer Nachteil bei der bekannten Anordnung ist darin zu sehen, dass ein oberer Druckraum für das Drucköl ausgebildet ist, der ein großes Schluckvolumen aufweist und der sich an der Unterseite des Deckels ausbildet. Wegen des hohen Schluckvolumens sind hohe Volumina für das Drucköl zu vergegenwärtigen und wegen der Anordnung unterhalb des Deckels kann es passieren, dass der Druckraum den Deckel nach oben wölbt, wodurch eine Ungenauigkeit bei der Auflage der darauf aufliegenden Werkstückpalette entsteht.

Bedingt durch die großen Füllvolumina des Druckraums sind auch nur geringe Lastwechselzyklen möglich, weil das Öl aus dem Zylinderraum vollständig entfernt werden muss, bevor ein neuer Lastwechsel beginnt.

Mit dem Gegenstand der auf den gleichen Erfinder zurückgehenden EP 0 827 805 B1 ist ein weiteres Schnellspannsystem bekannt geworden, bei dem ebenfalls die Kraft des Tellerfederpaketes im Verhältnis 1:1 in eine entsprechende Einzugskraft auf den Einzugsnippel umgewandelt wird. Überdies besteht der weitere Nachteil, dass die relativ klein dimensionierten Verriegetungskugeln bei der Erzeugung der nach unten gerichteten Einzugskraft auf den Einzugsnippel auf Abscherung beansprucht werden. Sie haben jeweils nur eine sehr geringe Eintauchtiefe, die einmal durch die entsprechend radial auswärtsgerichtete Ringausnehmung im Kolben und zum anderen in die zugeordnete und gegenüberliegend angeordnete Ringnut am Einzugsnippel definiert ist. Nachdem die Eintauchtiefen auf beiden Seiten der Verriegelungskugel zu den gegenüberliegenden Teilen im Gehäuse relativ klein sind, sind diese Kugeln im hohen Maße auf Abscherung beansprucht, wenn hohe Verriegelungskräfte gewünscht werden. Wegen der geringen Eintauchtiefe der Verriegelungskugeln in den zugeordneten Kolben entstehen starke, radial schräg nach oben und außen gerichtete Aufplatzkräfte auf den Kolben, die versuchen den Kolben aufzuweiten oder sogar zu sprengen.

Bedingt durch die geringen Auflageflächen der kleindimensionierten Verriegelungskugeln an den zugeordneten Auflageflächen am Einzugsnippel bilden sich bei längerdauernder Beanspruchung des Spannsystems Abdrücke an den Anlageflächen am Einzugsnippel aus, was zu einer unerwünschten Veränderung der Einzugskraft führt.

Durch die unerwünschte Eindrückung der Verriegelungskugeln am Außenumfang des Einzugsnippels kam es sogar zu Materialabtragungen in Form von Spänen, die am Einzugsnippel festhafteten und ein Herausziehen des Einzugsnippels aus der zentralen Ausnehmung im Spannzylinder überhaupt verhinderten.

Um die beschriebenen Probleme in den Griff zu bekommen, wurde bei dem bekannten Spannzylinder der Kolben und der Einzugsnippel vollständig aus einem hochgeharteten Werkzeugstahl hergestellt, was jedoch mit einer entsprechenden Sprödigkeit des Materials bei hohen Herstellungskosten in Kauf genommen werden muss.

Mit der DE 101 18 808 A1 wird eine Schnellspann-Einrichtung mit Kugelführung für die Einspannung eines Einzugsnippels in der zentralen Aufnahmebohrung eines Zylinders offenbart, wobei in dem Zylinder unter Wirkung eines Kraftspeichers mindestens ein Kolben verschiebbar angeordnet ist, welcher in Gegenrichtung hierzu von einem Druckmedium beaufschlagbar ist, wobei zur Verriegelung des Einzugbolzens mehrere auf einer Umfangsbahn im Zylinder angeordnete Wälzkörper von dem Kolben in radialer Richtung einwärts auf zugeordnete Schrägen am Außenumfang des Einzugsnippels einrückbar sind und ferner zur Entriegelung der Kolben von dem Druckmedium beaufschlagt die Wälzkörper aus den Schrägen am Einzugsnippel radial auswärts außer Eingriff mit dem Einzugsnippel bringbar sind und der Einzugsnippel zur Beseitigung eines axialen Bewegungsspiels in seiner Schließstellung formschlüssig verriegelt ist.
Diese Erfindung hat den Nachteil, dass diese keine Schräge am Kolben mit einer Neigung < 7° (Selbsthemmung) aufweist.

Mit der EP 0 827 805 A1 wird eine Spannvorrichtung zum Spannen eines Schnellspannzylinders auf einer Trägerplatte für Bearbeitungsmaschinen offenbart, wobei die Verriegelung zwischen Palette und dem Schnellspannzylinder mittels einem Einzugsbolzen erfolgt, welcher an der Palette befestigt ist und die entsprechenden Aufnahmen an dem Schnellspannzylinder klemmend eingreift, wobei die Klemmverbindung über Spannfedern aufrecht erhalten bleibt und zur Entriegelung ein Hydraulikkolben betätigbar ist, welcher die Klemmkraft der Spannfedern überwindet, wobei der Raum im Schnellspannzylinder zwischen dem mittleren Einzugsbolzen und den seitlich von diesen angeordneten Spannfedern abgedichtet ist.
Diese Erfindung weist ebenfalls den Nachteil auf, dass diese keine Schräge am Kolben mit einer Neigung < 7° (Selbsthemmung) aufweist.

Mit der WO 02/078898 A1 wird eine Vorrichtung zum lösbaren halten von Werkstücken an Bearbeitungseinrichtungen offenbart, wobei eine Aufspannplatte mit der Bearbeitungseinrichtung zur Bearbeitung von Werkstücken verbindbar ist, und einen mit der Palette oder Werkstück verbundenen, in der Aufspannplatte lösbar gehaltenen Spannzapfen aufweist, wobei mindestens eine Feder eine Aufspannkraft zur Befestigung des Spannzapfens auf der Aufspannplatte erzeugt und einen hydraulisch oder pneumatisch entgegen der Aufspannkraft bewegbarer Kolben aufweist, und eine Kugelhülse mit Kugeln, welche in die Kugelhülse des Kolbens bewegbar und mit dem Spannzapfen zusammenwirkend angeordnet ist, dass der Spannzapfen entgegen der Aufspannkraft lösbar ist, wobei an der Aufspannplatte ein mit dem Spannzapfen zusammenwirkender einstückig und ringscheibenförmig ausgebildeter Zentrierbereich ausgebildet ist.
Diese Erfindung weist den gleichen Nachteil entsprechend der beiden vorbenannten Erfindungen auf.

Der Erfindung liegt deshalb ausgehend von der DE 101 18 808 A1 die Aufgabe zugrunde ein Spannsystem der eingangs genannten Art so weiterzubilden, dass mit wesentlich kleineren Federn eine höhere Einzugskraft bei geringerer Materialbeanspruchung der Anlageflächen zwischen den Verriegelungskugein und der zugeordneten Flächen im Spannzylinder erreicht wird.

Zur Lösung der gestellten Aufgabe ist die Erfindung durch die technische Lehre des Anspruches 1 gekennzeichnet.

Wesentliches Merkmal der Erfindung ist, dass das Spannsystem nach der Erfindung im wesentlichen aus einem zwischen Flächen des Deckels und des Gehäuses verschiebbar und abdichtend geführten Kolben besteht, der radial einwärts schwach geneigte Schrägen ausbildet, an denen die Verriegelungskugeln Iastübertragend anliegen, die sich mit einer weiteren Kugelposition an der Unterseite des Deckels anlegen und mit einer dritten Kugelposition an einer entgegengesetzt gerichteten Schräge am Außenumfang des Einzugsnippels anlegen.

In an sich bekannter Weise wird der Kolben in seine Verriegelungsstellung durch ein Federpaket vorbelastet. Hierbei kann dieses Federpaket aus Tellerfedern, Schraubenfedern oder anderen beliebigen elastomeren Kraftspeichern bestehen. Statt der Anordnung von Federn kann auch ein entsprechender Gegendruck durch ein Fluid oder durch ein Gas erzeugt werden.

Wesentlich bei der Erfindung ist, dass die Kugeln nun an zwei entgegengesetzt gerichteten Schrägen anliegen, nämlich zum einen an einer Schräge des Kolbens, welche die Kugel gegen die Unterseite des Deckels lenkt und ferner an einer gegenüberliegenden Schräge am Außenumfang des Einzugsnippels, welche der erstgenannten Schräge am Zylinder entgegengesetzt ist.

Auf diese Weise kommt es zu einer Hebelübersetzung der Federkraft, welche auf den Kolben wirkt. Die erstgenannte Schräge am Kolben hat beispielsweise einen Winkel von 3° bis 6°, bevorzugt 5°, so dass es sich um eine relativ schwach geneigte Schräge handelt, die im selbsthemmenden Bereich liegt, weil sie unterhalb der Grenze der Selbsthemmung von 7° liegt.

Wenn nun die Federkraft in Verschiebungsrichtung auf den Kolben wirkt, wird die Kugel von der gering geneigten Schräge nach oben mitgenommen und legt sich mit der gesamten Federkraft des Federpaketes an der Unterseite des Deckels an. Diese Anlageposition hat in radialer Richtung einen Abstand von der Anlageposition der Kugel am Zylinder. Hierdurch entsteht ein erster Hebelarm der sich jenseits des Kugelauflagepunktes an der Unterseite des Deckels in einen zweiten Hebelarm fortsetzt, der schließlich an der Schräge des Einzugsnippels endet.

Weil die beiden Schrägen entgegengesetzt sind, wird im Ergebnis die Federkraft des Federpaketes im Verhältnis von beispielsweise 1:6 in eine zugeordnete Einzugskraft auf den Einzugsnippel übertragen. Die Verriegelungskugeln wirken als Hebelarm und bewirken eine Übersetzung der Kraft der Tellerfedern in eine vergrößerte Einzugskraft auf den Einzugsnippel.

Damit ist es nun erstmals möglich mit relativ gering dimensionierten Federpaketen eine sehr hohe Einzugskraft zu erzeugen, was dazu führt, dass man bei gleicher Einzugskraft - wie beim Stand der Technik - das Gehäuse wesentlich kleiner bauen kann, weil geringer dimensionierte Federpakete erforderlich sind.

Wichtig ist ferner, dass die Verriegelungskugeln nun relativ groß dimensioniert werden können, weil viel Platz im Gehäuse vorhanden ist, weil die Kugeln frei geführt sind und kein Kugelkäfig mehr vorhanden ist.

Ferner ist wesentlich, dass die Kugeln nicht mehr auf Abscherung beansprucht werden, sondern lediglich auf Zusammendrückung (Kompression).

Die Kugeln finden eine stabile Dreipunktauflage, denn jede Kugel liegt mit ihrem radial äußeren Teil an der Innenseite des Kolbens an, während sie mir ihrem vertikal oberen Teil an der Unterseite des Deckels und mit ihrem radial innenliegenden Teil an der Außenfläche des Einzugsnippels anliegt. Durch diese stabile, durch drei Kugelpositionen definierte Lage, werden die Kugeln gleichmäßig beansprucht und brauchen nicht aus einem hochwertigen Material hergestellt zu werden, weil wesentlich geringere Kugeldruckkräfte entstehen.

Hierbei genügt es, die Kugeln aus einem einsatzgehärtetem Stahl von relativ geringer Güte zu fertigen. Dies führt dazu; dass die Kugeln nur am Außenumfang gehärtet werden müssen, während der innere Kern aus einem relativ weichen Metallmaterial besteht. Hierdurch entsteht der Vorteil, dass die Kugeln selbst im gewissen Masse elastisch verformbar sind und sich auch aufgrund der Dreipunkt-Kugelauflage elastisch verformen können. Bei entsprechend unsymmetrischen Einzugskräften oder einer unsymmetrisch belasteten Werkstückpalette gleicht die elastische Verformung der einzelnen Verriegelungskugeln in bestimmten Umfangsbereichen eine Verkantungskraft auf den Einzugsnippel aus, weil sich die Kugeln durch elastische Verformung gleichmäßig ausrichten und am Außenumfang des Einzugsnippels zentrieren.

Auch Ungenauigkeiten bei der Herstellung des Spannsystems (zum Beispiel bei der Herstellung des Kolbens) werden durch die teilweise elastische Verformbarkeit der Kugeln ausgeglichen, die sich jeweils selbsttätig im Bereich ihrer Dreipunkt-Auflage am Einzugsnippel zentrieren.

Weiter hilft zur selbsttätigen Zentrierung der Verriegelungskugeln am Außenumfang des Einzugsnippels auch die Tatsache, dass die Stelle des Kolbens, an denen die Verriegelungskugeln lastübertragend anliegen als einseitig freier Ringansatz des Kolbens ausgebildet ist. Bei Einwirkung hoher Verriegelungskräften kann sich der einseitig nach oben gerichtete Ringansatz des Kolbens tulpenförmig - lokal begrenzt - über den Umfang des Kolbens gesehen aufweiten. Dadurch erfolgt ebenfalls eine entsprechende Zentrierung der Verriegelungskolben an den Verriegelungskugeln. Auf der anderen Seite läuft der tulpenförmige Ringansatz des Kolbens mit relativ geringer Querschnittsdicke an einem stark dimensionierten Deckelansätz des Deckels entlang, so dass hier eine stabile Anlagefläche des Kolbens am Deckel gegeben ist.

Durch die Tatsache bedingt, dass eine Übersetzung des Hebelverhältnisses von etwa 1 : 6,5 stattfindet, werden bei einem wesentlich kleineren Gehäuse eines Schnellspannzylinders mit kleiner dimensionieren Tellerfedern Einzugskräfte im Bereich von 20.000 N erreicht. Beim Stand der Technik werden mit größer dimensionierten Tellerfedern und größeren Gehäusedurchmessern lediglich Einzugskräfte im Bereich von 6.722 N erreicht.

Neben der Ausnutzung der Hebelkraft der Verriegelungskugeln liegt der Erfindung die weitere Erkenntnisse zugrunde, dass die Kugeln auch gleichzeitig zur selbsttätigen Zentrierung am Einzugsnippel verwendet werden können, weil entsprechende Materialverformungen ausdrücklich zugelassen sind.

Bei der Erfindung findet aufgrund der Dreipunkt-Auflage der Verriegelungskugeln eine vollständig formschlüssige Verriegelung des Einzugsnippels statt. Die vorher genannte, relativ gering geneigte Schräge am Kolben führt zu einer Selbsthemmung der Verrieglungskugeln im Verriegelungszustand. Damit es ist auf keinen Fall mehr möglich, den verriegelten Einzugsnippel entgegen der ausgeübten Einzugskraft nach oben aus dem Schnellspannzylinder herauszuziehen.

Anders ist dies beim Stand der Technik, wo es noch möglich ist, den Einzugsnippel über einen kleinen Verschiebungsweg von beispielsweise 2 mm entgegen der ausgeübten Federkraft aus dem Gehäuse des Schnellspannzylinders herauszuziehen, auch wenn sich dieser im Verriegelungszustand befindet. Dies liegt daran, dass die Verriegelungsizugeln in einem Kugelkäfig gelagert sind, der bei Überschreitung der Verriegelungskraft erst nach Zurücklegung des Verschiebungsweges an einer zugeordneten gehäuseseitigen Fläche ansteht.

Ein weiterer Vorteil der Erfindung liegt darin, dass sich die Kugeln im Verriegelungszustand aufgrund der gering geneigten Schräge am Kolben in der Selbsthemmung befinden. Wenn eine Feder von mehreren gleichmäßig am Umfang verteilt angeordneten Tellerfedern bricht, spielt dies für die Beibehaltung des Verriegelungszustandes keine Rolle. Vielmehr wird der Verriegelungszustand aufrecht erhalten, weil sich jede Kugel im selbsthemmenden Verriegelungseingriff befindet.

Anders ist dies beim Stand der Technik, wo beim Bruch einer oder mehrerer Federn die Verriegelungskraft sofort aufgehoben wird und der Einzugsnippel entgegen der (aufgehobenen) Verriegelungskraft ohne weiteres aus dem Zylindergehäuse herausgezogen werden kann.

Ein weiterer Vorteil der Erfindung ist darin zu sehen, dass das erfindungsgemäße Spannsystem verblüffend wenig Teile aufweist. Es werden sogar zur weiteren Verminderung der Teileanzahl mehrere Teile zu einem sogenannten Einbaumodul zusammengefasst. Das Federpaket wird mit dem unteren Teil des Spannsystems und der Kugelauflage zu einem sogenannten Einbaumodul zusammengefasst. Deshalb kann ein Spannsystem nach der Erfindung auch in einer Überkopf-Montagelage oder einer senkrechten Montagelage montiert werden, was beim Stand der Technik nicht der Fall ist. Dort mussten bei abgenommenen Deckel erst die Tellerfedern in den Innenraum des Gehäuses hochgenau positioniert eingelegt werden, bevor der Deckel geschlossen werden konnte. Es versteht sich von selbst, dass bei einer solchen Montage eine senkrechte oder Überkopf-Montage nicht möglich ist, weil es wegen der Verrutschungstendenz der Tellerfedern nicht möglich ist, diese hochgenau am Umfang gleichmäßig positioniert im Gehäuse zu befestigen und danach dann den Deckel aufzuschrauben.

Die Verwendung derartiger Einbaumodule hat auch den Vorteil, dass man sie vormontieren kann und die Montage hierdurch erleichtert wird und eine schnelle Auswechslung gegeben ist.

Mit der Ausbildung relativ groß dimensionierter Verriegelungskugeln in Verbindung mit deren Dreipunkt-Anlage im Schnellspannsystem ergibt sich der weitere Vorteil, dass Fehlbedienungen des Systems erschwert sind. Beim Stand der Technik musste eine sogenannte Überwachung der Verriegelungsstellung vorgenommen werden, weil nicht erkennbar war, ob der Einzugsnippel verriegelt war oder nicht. Es konnte daher beim Stand der Technik passieren, dass die Verriegelungskugeln bereits in ihre Verriegelungsposition gebracht wurden, ohne dass überhaupt der Einzugsnippel in die zentrale Ausnehmung eingefahren war. Es fassten dann nicht die Kugeln am Außenumfang des Einzugsnippels und irrtümlich wurde aber angenommen, dass der Einzugsnippel bereits verriegelt ist. Es mussten deshalb - zur Vermeidung dieser Fehlbedienung - umfangreiche Sicherungsmaßnahmen getroffen werden um eine nichtvorhandene Verriegelung zu kennzeichnen (Verriegelungsabfrage).

Bei der Erfindung ist eine derartige Verriegelungsabfrage nicht notwendig. Fehlt beispielsweise das Drucköl für die Beaufschlagung des Kolbens und befindet sich dieser in der Verriegelungsposition, welche die Kugeln radial einwärts in die zentrale Mittenausnehmung des Spannsystems befördert, dann ist es nach der Erfindung nicht möglich, den Einzugsnippel in die zentrale Ausnehmung im Spannsystem einzufahren. Der Einzugsnippel fährt auf den Außenumfang der radial einwärts verdrängten großvolumigen Verriegelungskugeln auf und kann an diesen nicht vorbeibewegt werden, wodurch eine scheinbare Verriegelungsposition nicht erreicht werden kann.

Die große Eintauchtiefe der in die zentrale Ausnehmung des Gehäuses hineinragenden Verriegelungskugeln verhindert ein Passieren des Einzugsnippels in die Verriegelungsstellung, so dass es nicht möglich ist, in dieser Stellung den Einzugsnippel weiter in das Gehäuse einzufahren.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführung eines Schnellspannzylinders nach der Erfindung;
- Figur 2:: eine ausschnittsweise Darstellung der Anordnung nach Figur 1;
- Figur 3:: Schnitt durch eine zweite Ausführungsform eines Schnellspannzylinders mit Luftausblasung;
- Figur 4:: Schnitt durch eine weitere Ausführungsform eines Schnellspannzylinders mit einer zentralen, freigehaltenen Mittenbohrung, welche als Flüssigkeitsablauf oder als Lufteinblasung verwendet werden kann;
- Figur 5:: Schnitt durch die erste Ausführungsform eines Einbaumoduls;
- Figur 6:: Schnitt durch eine zweite Ausführungsform eines Einbaumoduls;
- Figur 7:: Schnitt durch ein Einbaumodul eines Schnellspannzylinders, der in eine zugeordnete Ausnehmung in einen Maschinentisch oder einer Aufspannplatte eingesetzt werden kann;
- Figur 8:: Draufsicht auf die Anordnung nach Figur 7 bei entfernter Werkstückpalette;
- Figur 9:: die gleiche Darstellung eines Schnellspannzylinders wie Figur 3 mit Hinzunahme einer Werkstückpalette;
- Figur 10:: die Draufsicht auf die Anordnung nach Figur 9 und Figur 3 bei entfernter Werkstückpalette;
- Figur 11:: Schnitt durch eine weitere Ausführungsform eines Schnellspannzylinders in Form einer Einbaukassette;
- Figur 12:: Schnitt durch eine weitere Ausführungsform eines Schnellspannzylinders mit einem zentralen Auswerfer;
- Figur 13:: Schnitt durch eine weitere Ausführungsform eines Schnellspannzylinders in Form einer Einbaukassette mit zwei unterschiedlichen Druckanschlüssen;
- Figur 14:: eine gegenüber Figur 13 abgewandelte Ausführungsform als Aufbauzylinder.

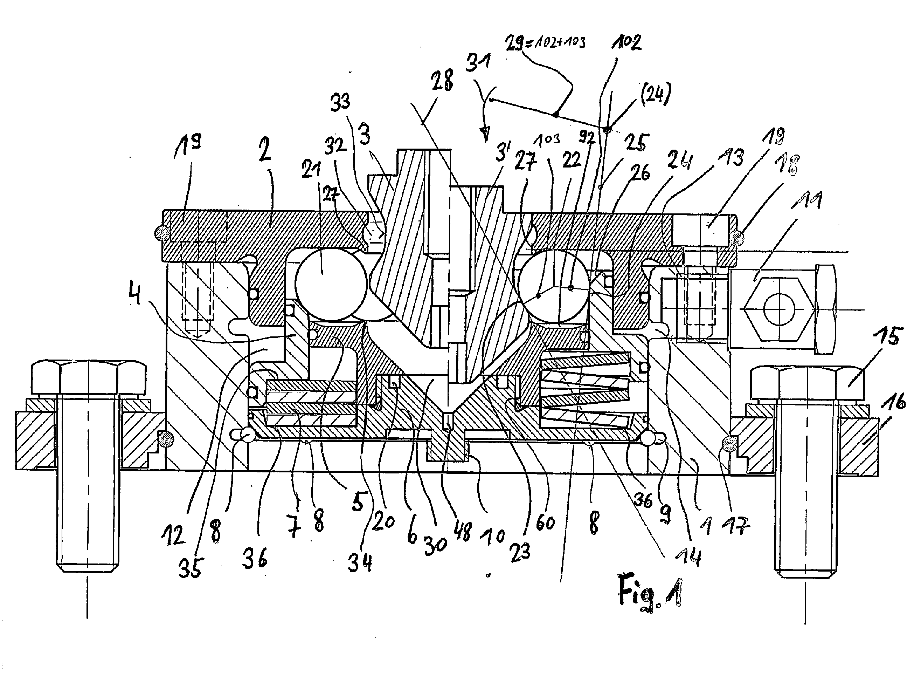

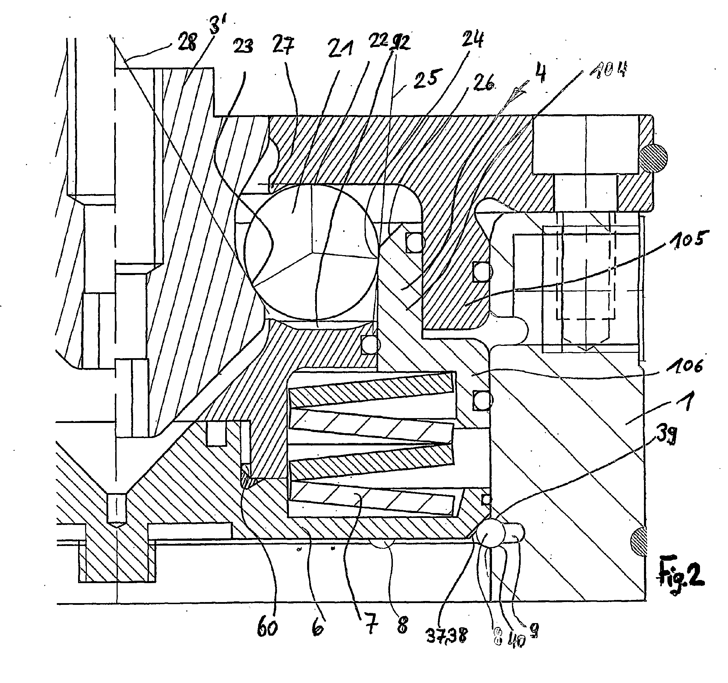

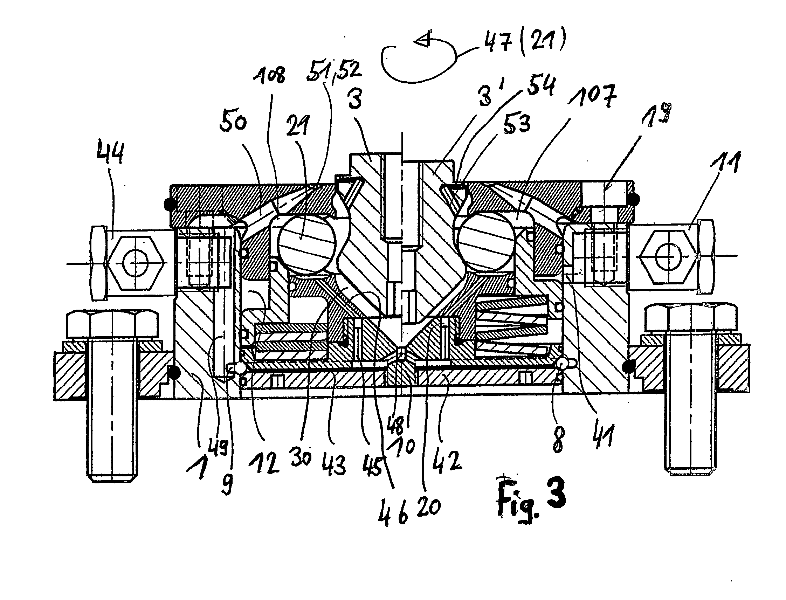

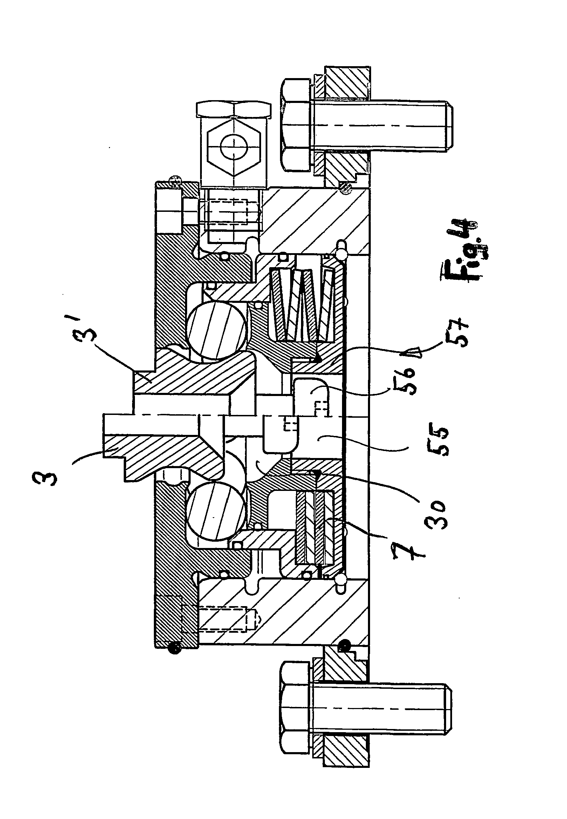

In Figur 1 ist allgemein ein Schnellspannzylinder dargestellt, der bevorzugt ein Rohrgehäuse 1 aufweist, welches mit Hilfe von Schrauben 15 und einem zugeordneten Spannring 16 auf einen nicht näher dargestellten Maschinentisch oder einer Aufspannplatte befestigt ist. Die Verbindung zwischen dem Spannring 16 und dem Rohrgehäuse 1 erfolgt hierbei durch einen teilweise in beide Teile hineinragenden Sicherungsring 17.

Der Schnellspannzylinder weist einen oberen Deckel 2 auf, der gleichmäßig verteilt am Umfang angeordnete Schrauben 19 trägt, mit denen dieser auf der Oberseite des Rohrgehäuses 1 festgeschraubt ist. Der obere Sicherungsring 18 am Deckel 2 dient als Anschlag für eine entsprechende Blechabdeckung zur Abdeckung der Oberseite des Schnellspannzylinders.

Der Einzugsnippel 3 wird in die zentrale Mittenausnehmung 32 des Schnellspannzylinders von oben her eingefahren, der in zwei verschiedenen Spannstellungen dargestellt ist. Im rechten Halbschnitt ist der Einzugsnippel 3' in der Verriegelungsstellung dargestellt, während der linke Halbschnitt in Figur 1 den entriegelten Zustand des Verriegetungssystems darstellt.

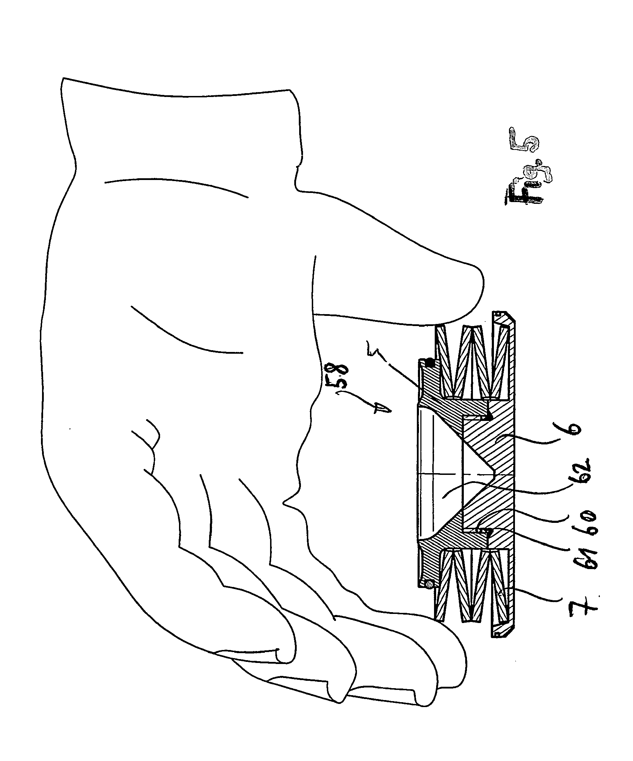

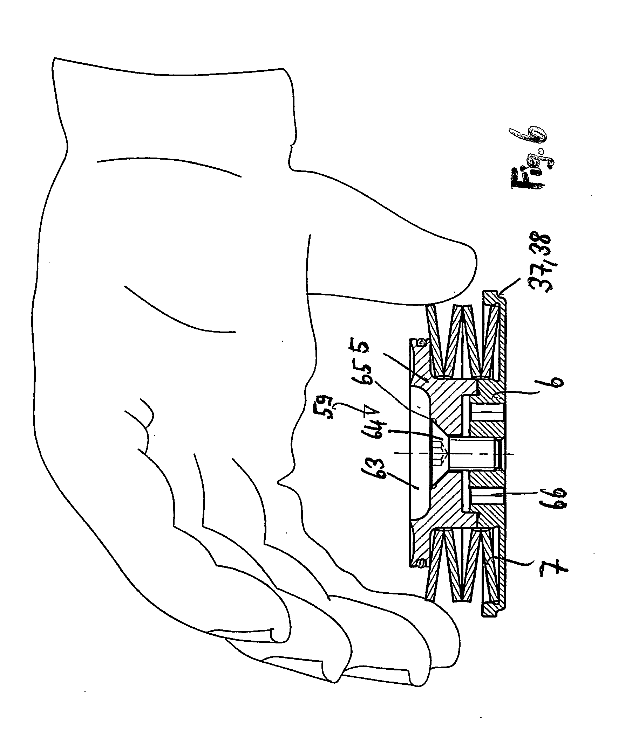

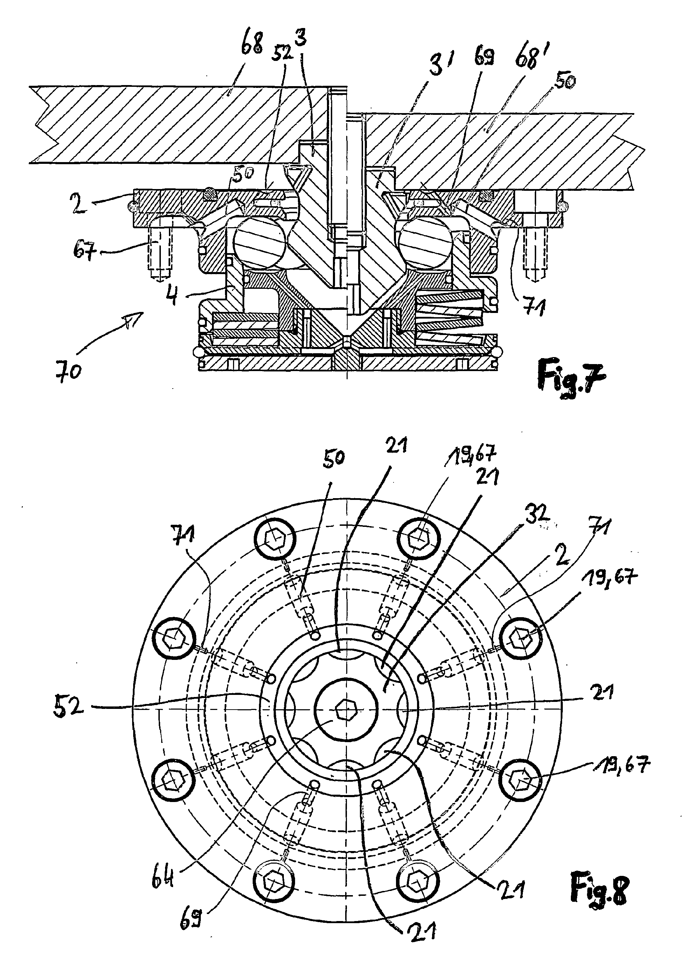

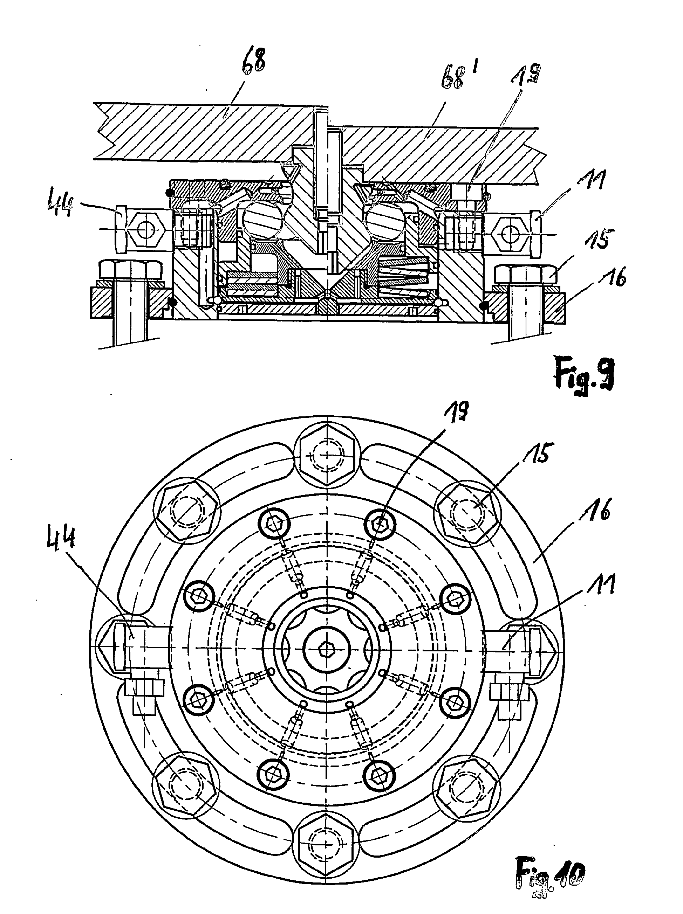

Das Verriegelungssystem wird im wesentlichen durch einen Kolben 4 gebildet, der gemäß Figur 2 als rohrförmiges, abgekröpftes Teil ausgebildet ist und einen oberen, freitragenden Ringansatz 104 aufweist, der über eine Abkröpfung in einen radial nach außen gerichteten weiteren Ringansatz 106 übergeht, der abdichtend an zugeordneten Innenflächen des Rohrgehäuses 1 geführt ist.

Die Außenseite des Kolbens 4 legt sich über entsprechende Dichtringe abdichtend an einem zugeordneten Deckelansatz 105 an, der ebenfalls freitragend ausgebildet ist und eine relativ große Materialstärke aufweist, so dass er biegesteif ist. Der Ringansatz 104 des Kolbens 4 ist hingegen teilweise radial gerichtet nach außen verformbar.

Die gleichmäßig verteilt am Umfang angeordneten Verriegelungskugeln 21 liegen bodenseitig auf zugeordneten radial gerichteten Kugelbahnen 92 einer Kugelauflage 5 auf. Die Kugelauflage bildet radial einwärts gerichtet jeweils eine umlaufende, etwa nasenförmig nach oben gerichtete Kugelhalterung 34 für die Lagensicherung der Verriegelungskugeln 21 aus.

Andererseits sind die Verriegelungskugeln auch an der Deckelseite des Deckels 2 über entsprechende Kugelhalterungen 27 gegen Herausfallen gesichert, wobei sowohl die Kugelhalterung 27 als auch die Kugelhalterung 34 nicht lastübertragend wirken.

Im Verriegelungszustand werden die Kugelhalterungen 27 nicht berührt oder tragen zur Lastübertragung bei.

Die Kugelauflage 5 ist über ein Gewinde 60 mit einer unteren Federauflage 6 verbunden, so dass die beiden Teile ein Einbaumodul bilden.

Wichtig hierbei ist, dass die beiden Teile einen umlaufenden Aufnahmeraum für die gleichmäßig verteilt, am Umfang angeordneten Federn 7 bilden.

Hierbei ist ebenfalls wichtig, dass jede Feder 7 radial auswärts an einer entsprechend radial auswärtsgerichteten oberen Federauflagefläche 35 an der Unterseite des Kolbens 4 anliegt und gleichfalls auf einer radial auswärtsgerichteten unteren Federauflagefläche 36 der Federauflage 6 aufliegt.

Durch die radial auswärtsgerichteten Federauffageflächen 35, 36 wird verhindert, dass sich der Boden der Federauflage 6 in unerwünschter Weise durchbiegt. Durch die radial auswärtsgerichtete, obere Federauflage 35 ergibt sich der Vorteil, dass sich diese ungefähr fluchtend unterhalb des Zylinderraums 12 befindet, so dass der Zylinderraum 12 beim Lösen der Verriegelung nicht verformt wird.

Die untere Federauflage 6 ist mit Hilfe von gleichmäßig verteilt am Umfang angeordneten Sperrkugeln 8 in das Rohrgehäuse 1 eingepasst. Hierbei liegen gemäß Figur 2 die Sperrkugeln 8 jeweils an schräg auswärtsgerichteten Schrägen 37 an der Federauflage 6 an, wobei im Bereich dieser Schräge 37 zugeordnete Nuten angeordnet sind, welche die Sperrkugeln 8 führen.

Die Nuten 38 sind gleichmäßig verteilt am Umfang angeordnet und entsprechen der Anzahl der verwendeten Sperrkugeln 8, um so die Sperrkugeln gegen Verschiebung in Umfangsrichtung zu schützen.

An der gegenüberliegenden Seite liegen die Sperrkugeln 8 an einem unteren Radius 40 im Bereich des Rohrgehäuses 1 an und gleichzeitig an einem entgegengesetzt gerichteten Radius 39 im Bereich des Rohrgehäuses 1. Die Schräge 37 drückt damit die Sperrkugeln 8 in die beiden gegengesetzt gerichteten Radien 39, 40 hinein, wodurch eine absolut sichere und hochlastübertragende Verbindung zwischen dem inneren Einbaumodul des Verriegelungssystems und dem Rohrgehäuse stattfindet.

Radial auswärts ist ein umtaufender Einstich 9 für die Luftführung der Blasluft vorhanden. Auf diese Luftführung wird später noch eingegangen.

An der unteren Stirnseite der Federauflage 6 ist im Übrigen noch ein zylinderförmiger Gewindeansatz 10 angeformt, der mit einem später zu beschreibenden Deckel verbindbar ist.

Über den Druckanschluss 11 wird ein Druckmedium in den Innenraum des Rohrgehäuses 1 eingeführt, wobei dieses Druckmedium - entsprechend dem allgemeinen Beschreibungsteil - beliebig sein kann. Der Einfachheit halber wird in der folgenden Beschreibung von einem Drucköl ausgegangen, obwohl die Erfindung hierauf nicht beschränkt ist.

Das Drucköl wird über den Druckanschluss 11 in eine zugeordnete Sackbohrung 13 eingeführt, die über einen Ringeinstich 14 flüssigkeitsleitend mit dem Zylinderraum 12 verbunden ist. Über diesen Zylinderraum wird das Drucköl dem Kolben 4 zugeführt. Wichtig ist, dass durch die Gegenüberstellung einmal des Deckelansatzes 105 im Deckel 2 und andererseits durch die Abkröpfung im Kolben 4 ein sehr kleinvolumiger Zylinderraum 12 geschaffen wird, in den nur geringe Füllmengen eingefüllt werden müssen. Daher können wegen des kleinen Volumens des Zylinderraums 12 schnelle Lastwechsel durchgeführt werden und es ist nicht mehr der Nachteil gegeben, dass der Deckel sich unbeabsichtigt durch das eingeführte Öl verformen könnte, weil der Druckraum im Bereich eines Deckelansatzes 105 verstärkten Querschnittes ausgebildet ist.

Gleichzeitiger Vorteil dieser Maßnahme ist, dass der Zylinderraum 12 möglichst weit radial auswärts in dem Rohrgehäuse 1 angeordnet ist und zwar in die Nähe der radial auswärts angeordneten Schrauben 19 zwischen dem Deckel 2 und dem Rohrgehäuse 1, so dass everituelle auf den Deckel einwirkende Verformungskräfte in vorteilhafter Weise von den Schrauben 19 aufgenommen werden.

Damit kann auch der Übergangsbereich im Deckel zwischen dem nach unten verlängerten Deckelansatz 105 und dem Material des Deckels, durch welches die Schrauben 19 hindurchgreifen, besonders stark, hochlastübertragend und gegen Verformungen geschützt ausgebildet werden.

Bedingt durch die Tatsache, dass lediglich der Deckel im radial auswärts gelegenen Bereich (jenseits der Verriegelungskugeln 21 und des Kolbens 4) materialverstärkt ausgebildet werden rhuss, ergibt sich der weitere Vorteil, dass im radial einwärtsgerichteten Bereich nun nur noch geringe Deckelmaterialstärken erforderlich sind, wodurch insgesamt das in diesem Bereich angeordnete Verriegelungssystem kleiner baut.

Während beispielsweise der Deckel in seinem materialverstärkten, radial auswärtsgerichteten Bereich eine Dicke von zum Beispiel 10 mm aufweist, weist er im Bereich der Verriegelungskugeln 21 nur noch eine Dicke von 7 mm auf. Daher ist es möglich, in diesem Bereich das Verriegelungssystem mit großen Verriegelungskugeln auszubilden, die hochlastübertragend sind. Insgesamt kann damit die Einbauhöhe des gesamten Schnellspannsystems wesentlich gegenüber dem Stand der Technik verringert werden.

Nachfolgend wird die Hebelübertragung der Verriegelungskraft der Federn 7 auf den Einzugsnippel 3, 3' näher erläutert. Hierzu gelten die Zeichnungen nach Figur 1 und 2.

Wie in Figur 1 und 2 erkennbar, liegt jede Verriegelungskugel 21 radial auswärts bei Position 24 an einer zugeordneten, schwach geneigten Schräge 25 am Innenumfang des Kolbens 4 an. Die schwachgeneigte Schräge 25 wird in axialer Richtung in eine stärker geneigte, größere Schräge 26 fortgesetzt.

Die stärker geneigte Schräge 26 dient für die Ausführung eines sogenannten Schnellhubes. Beim Übergang von der Verriegelungsstellung in die Entriegelungsstellung soll jede Verriegelungskugel möglichst schnell über die steile Schräge 26 nach außen in die Entriegelungsstellung gebracht werden. Damit wird die Verriegelungskugel 21 sehr schnell bei einem entsprechenden Entriegelungshub aus dem Bereich der (Kraft-) Schräge 25 gebracht, weil sie dann sofort auf die steiler geneigte Rollschräge 26 kommt und außer Eingriff mit dem Einzugsnippel 3 gebracht wird.

Die Übersetzung des Hebelverhältnisses erfolgt dergestalt, dass die Federn 7 zunächst gegen die Unterseite im Bereich der Federauflagefläche 35 gegen den Kolben 4 pressen. Diese Presskraft wird über den rohrförmigen Ringansatz 104 des Kolbens auf die schwächer geneigte Schräge 25 übertragen, wo die Kugeln jeweils bei Position 24 anliegen. Die Federkraft wird nun bei Position 24 über den Hebelarm 102 auf den oberen Kugelauflagepunkt bei Position 22 auf die Unterseite des Deckels 2 übertragen. Dort stützt sich jede Verriegelungskugel 21 ab und bildet dort einen weiteren Hebelarm 103, der schließlich mit der Kugelauflage bei Position 23 am Innenumfang des Einzugsnippels 3 endet.

Jede Verriegelungskugel 21 bildet einen Hebel 29, der sich aus der Addition der beiden Hebelarme 102 und 103 ergibt. Auf diese Weise ist es nun erstmals möglich, dass die bei Position 24 sich ergebende Federkraft der Federn 7 in Verhältnis von beispielsweise 1:6,5 auf die entsprechende Position 23 am Außenumfang des Einzugsnippels 3 übertragen wird, der dementsprechend mit einer 6,5-fachen vergrößerten Einzugskraft in den zentralen Innenraum 32 des Gehäuses des Spannsystems hineingezogen wird.

Die Schräge 28 am Einzugsnippel 3 ist stärker geneigt als vergleichsweise die Schräge 25 an dem Kolben 4. Dies führt dazu, dass wegen der stark geneigten Schräge 28 eine sehr hohe und stabile Einzugskraft entsteht und jede Verriegelungskugel mit großer Eintauchtiefe in die zugeordnete Freistellung 33 des Einzugsnippels 3 eintaucht.

Beim Stand der Technik wurden Verriegelungskugeln mit einem Durchmesser von 5 mm verwendet, was zu einer nutzbaren Oberfläche von etwa 78, 54 mm² führte.

Bei der Erfindung können nun erfindungsgemäß Kugeln mit beispielsweise einem Durchmesser von 14 mm verwendet werden, was zu einer nutzbaren Kugeloberfläche von 615,75 mm² führt. Dies ergibt eine Oberflächenvergrößerung von 784 %, was die eingangs beschriebenen Vorteile begründet.

Neben der elastisch verformbaren Kugeloberfläche wird dementsprechend auch eine sehr hohe Eintauchtiefe der Verriegelungskugeln 21 in die zentrale Freistellung 33 am Einzugsnippel 3 erzielt. Damit wird eine Materialabscherung oder eine Materialabtragung im Bereich der Schräge 28 vermieden, weil die Schräge 28 - im Vergleich zum Stand der Technik - einen relativ hohen Winkel gegenüber der Vertikalen aufweist.

Beim Stand der Technik konnte es vorkommen, dass die mit dem Einzugsnippel 3 verbundene Werkstückpalette im verriegelten Zustand unbeabsichtigt entgegen der Einzugskraft herausgerissen wurde, was mit starken Materialbeschädigungen im Bereich der Schräge 28 in Kauf genommen werden musste. Dies wird bei der Erfindung vermieden, weil die mit hoher Oberfläche und hoher Einzugskraft auf der Schräge 28 aufliegenden Kugeln eine Materialbeschädigung an der Schräge 28 verhindern.

Der Einzugsnippel 3 greift mit einer konischen Spitze in den zentralen Innenraum 30 im Spannzylinder ein, wobei später noch dargestellt wird, dass der zentrale Innenraum 30 auch nach unten hin geöffnet werden kann.

Die Pfeilrichtung 31 an dem Hebel 29 in Figur 1 zeigt im Übrigen, dass der Hebel 29 eine Verkippung ausführt, dass heißt, es erfolgt in Pfeilrichtung 31 eine Übertragung der Hebelkraft von dem Kolben 4 auf den Außenumfang des Einzugsnippels 3.

Der Innenraum 30 kann auch mit einer Luftausblasung versehen werden. Zu diesem Zweck ist in der Federauflage 6 eine vertikal gerichtete, einseitig offene Bohrung 48 angeordnet, deren Funktion später beschrieben wird. Der Luftumlenkung dient auch der später zu beschreibende Ringeinstich 20 an der Oberseite der Federauflage 6.

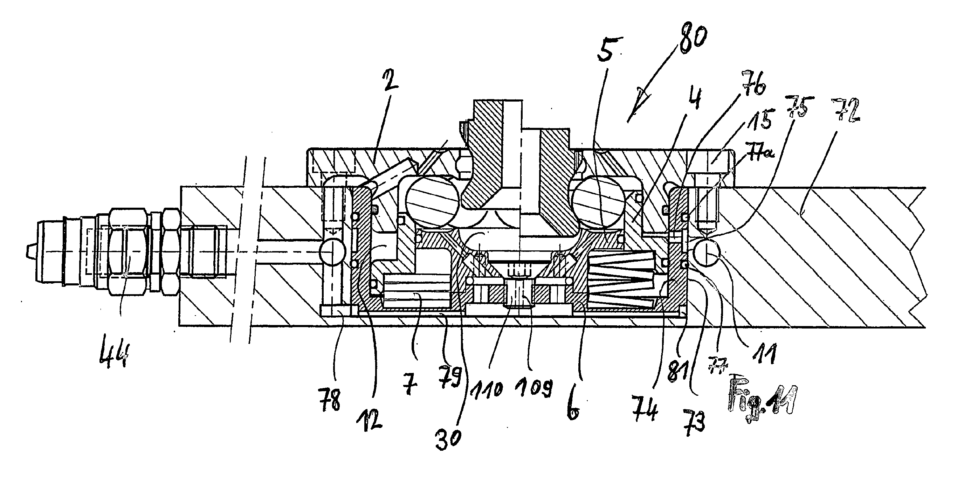

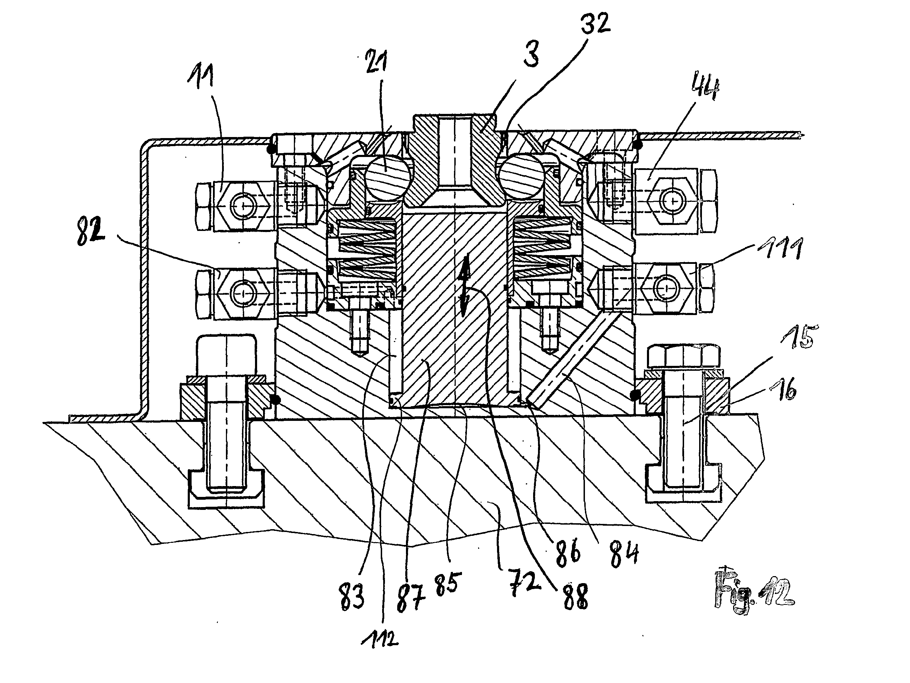

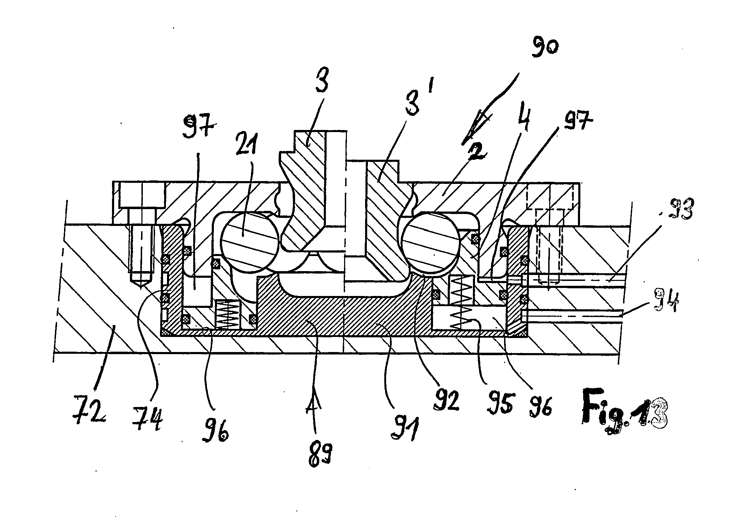

Die Figur 3 zeigt eine gegenüber Figur 1 abgewandelte Ausführungsform, die sich insbesondere durch eine neuartige Luftführung bei der Luftausblasung auszeichnet.

Ein entsprechendes Gas, Pressluft oder ein Kühlmittel wird über den Luftanschluss 44 in das Rohrgehäuse' 1 eingeleitet und gelangt dort über eine vertikale Steigbohrung in den unteren Bereich des Rohrgehäuses 1, wo das Druckmedium in den umlaufenden Einstich 9 gelangt.

Wie vorhin bereits schon beschrieben, ist ein Deckel 42 auf den Gewindeansatz 10 aufgeschraubt, so dass sich zwischen der Unterseite der Federauflage 6 und der Innenseite des Deckels 42 ein Spalt 43 für die Luftführung des Druckmediums ergibt. Dieses Druckmedium strömt zum einen über den am Außenumfang angeordneten Einstich 9 und zum anderen in den zentralen Innenbereich, wo es über den Spalt 43 in zugeordnete, vertikal nach oben gerichtete Steigbohrungen 45 eintritt. Von dort aus gelangt die Druckluft über den vorher erwähnten Ringeinstich 20 und dort wiederum in schräg nach oben gerichtete Einstiche 46, welche in die Kugelbahnen 92 münden. Auf diese Weise werden die Kugelbahnen 92 mit Hilfe der Blasluft gereinigt.

Wichtig bei der Luftführung ist, dass die Schrägbohrung 46 nicht nur der Zeichenebene der Figur 3 einen Winkel zur Vertikalen aufweist, sondern auch noch senkrecht zur Zeichenebene der Figur 3. Damit wird ein schräg gegen die Unterseite der Verriegelungskugeln 21 gerichteter Luftstrom auf die Kugelbahnen 92 gerichtet, der dafür sorgt, dass die Verriegelungskugeln in Pfeilrichtung 74 drehend angetrieben werden und auf den Kugelbahnen 92 senkrecht zur Zeichenebene der Figur 3 umlaufen.

Durch die mit hoher Geschwindigkeit umlaufenden Kugeln 21 wird auf den Verriegelungskugeln 21 sitzende Spänne abgeschleudert. Ebenso wird auf den Verriegelungskugeln sitzendes Kühlmediurn abgeschleudert. Damit werden die Verriegelungskugeln trocken und spänefrei gehalten. Durch den im gesamten Ringkanal der Verriegelungskugeln umlaufenden Luftstrom wird eine starke, zirkulierende Luftströmung erreicht, die darüber hinaus noch in die darüber liegenden Bohrungen am Einzugsnippel eindringt. Die Bohrungen sind in Figur 3 als Schrägkanal 53 bezeichnet und sind luftschlüssig mit dem daran anschließenden Horizontalkanal 54 verbunden.

In einem anderen Luftführungsweg wird das Druckmedium von dem Luftanschluss 44 in den schräg nach oben gerichteten Schrägkanal 50 geführt, wo die Luft im Bereich von Blasöffnungen 51 austritt, in deren Bereich jeweils noch ein Planeinstich 52 angeordnet ist.

Der von einer zirkulierenden Luftströmung durchsetzte Kugelkanal 107 ist über den Durchbruch 108 mit dem Schrägkanal 50 verbunden, so dass die beiden Kanäle luftschlüssig miteinander verbunden sind und die Turbolenz aus dem Kugelkanal 107 auch auf den Schrägkanal 50 geleitet wird.

Aufgrund der im Kugelkanal 107 und im Schrägkanal 50 zirkulierenden Luftströmung werden ausgezeichnete Trocknungsleistungen für in das Gehäuse des Spannsystems eindringendes flüssiges Medium erreicht.

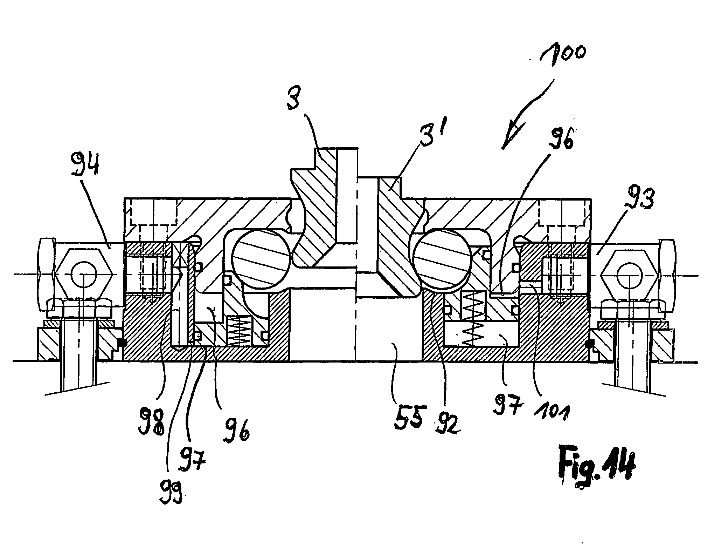

Die Figur 4 zeigt im Vergleich zur Figur 3, dass auch eine zentrale, nach unten gerichtete und offene Mittenöffnung 55 am Spannsystem vorgesehen werden kann. Damit setzt sich der zentrale Innenraum 30 im Rohrgehäuse 1 nach unten in die freie Mittenöffnung 55 fort. Über diese Mittenöffnung 55 kann Wasser oder Späne aus dem Innenraum 30 nach unten hin abfließen oder abtropfen und andererseits kann über die Mittenöffnung 55 auch - in nicht näher dargestellter Weise - von unten her Blasluft eingeführt werden, die den gesamten Innenraum 30 durchströmt.

In Abweichung zu der Ausführungsform nach Figur 3 ist im Übrigen dargestellt, dass der Einzugnippel 3 mit einer Fangschraube 56 verbunden ist, die dafür sorgt, dass in bestimmten Montagezuständen mit einer Fangeinrichtung der Einzugsnippel gefangen und in das Spannsystem eingezogen wird.

Gleichfalls ist die erste Ausführungsform eines Einbaumoduls 57 dargestellt, das anhand der Figuren 5 und 6 noch näher erläutert wird.

Kennzeichnend für dieses Einbaumodul ist, dass die Kugelauflage 5 mit der Federauflage 6 ein miteinander verbundenes Teil bilden und dass zwischen beiden Teilen 5, 6 die Federn 7 fest eingespannt sind. Die genannten Teile 5, 6, 7 sind damit in Form eines Einbaumoduls 57 zusammengefasst. Das Einbaumodul kann deshalb leicht ausgewechselt werden.

Die Figur 5 zeigt die zweite Ausführungsform eines Einbaumoduls 58, wobei die Kugelauflage 5 über ein zugeordnetes Gewinde 60 mit der Federauflage 6 verbunden ist, und im Zwischenraum eine zugeordnete Dichtung 61 angeordnet ist.

Figur 6 zeigt die weitere Ausführungsform eines Einbaumoduls 59, wobei die Kugelauflage 5 mit der Federauflage 6 über eine Schraube 64 verbunden ist. Die beiden Teile sind leicht lösbar miteinander verbunden. Im Bereich der Federauflage 6 sind vertikale Blasbohrungen 66 vorhanden. Die Kugelauflage 5 bildet eine obere, etwa napfförmige Öffnung 63, während bei dem Einbaumodul nach Figur 5 die Kugelauflage 5 eine etwa trichterförmige Konusöffnung 62 ausbildet, in welche der ebenfalls konisch ausgebildete Teil des Einzugsnippels 3 sich selbst zentrierend einfahren kann.

Im Ausführungsbeispiel nach Figur 6 ist die Schraube 64 mit einer Dichtung 65 in die zugeordnete Aufnahme in der Kugelauflage 5 eingeschraubt.

Wie im allgemeinen Beschreibungsteil erwähnt, ist der Vorteil der Einbaumodule 57-59 darin zu sehen, dass sie wegen der fixierten Lage der Federn 7 leicht auswechselbar sind. Deshalb ist auch eine Montage eines Schnellspannsystems in senkrechter oder Überkopflage möglich, ohne dass die Gefahr besteht, dass sich die Federn 7 in ihrer Montagelage im Einbaumodul verschieben.

Figur 7 zeigt ein Schnellspannsystem in der Ausbildung als Einbaumodul 70. Kennzeichnend für dieses Schnellspannsystem ist, dass es insgesamt als modulförmiger Körper in eine nicht näher dargestellte Ausnehmung in einen Maschinentisch oder Aufspannplatte eingesetzt werden kann und vollkommen autark funktioniert. Die Montage dieses Einbaumoduls 70 erfolgt mit Hilfe der Schrauben 67, mit denen das Einbaumodul in die (nicht dargestellte) Ausnehmung im Maschinentisch befestigt wird. Die Verwendung der Einbaumodule 57-59 ist vorteilhaft, weil der hierfür verwendete Kolben 4 lediglich in den Deckel 2 eingesteckt wird und das vollständig vormontierte Einbaumodul 57-59 mit den darauf liegenden Verriegetungskugeln 21 von unten her in den Deckel eingesteckt wird. Damit ist das gesamte System fertig montiert.

Es handelt sich also um eine besonders einfache Montage. Der Vollständigkeit halber ist noch dargestellt, dass der Einzugsnippel mit einer Werkstückpalette 68, 68' verbunden ist, auf der in nicht näher dargestellter Weise entweder Spannwerkzeuge für die Halterung von zu bearbeitenden Werkstücken angeordnet sind oder die Werkstücke direkt auf der Werkstückpalette 68 befestigt sind.

Die Figur 8 zeigt bei entfernter Werkstückpalette 68, 68'die Darstellung eines Spannsystems nach Figur 7. Hierbei ist erkennbar, dass in die zentrale Ausnehmung 32 des Gehäuses die Verriegeiungskugeh 21 mit großer Eintauchtiefe hineinragen, so dass auch die ausgezeichnete Halterung am Einzugsnippel 3 erkennbar ist.

Von dem Schrägkanal 50 ausgehend sind radial auswärtsgerichtete Schrägbohrungen 71 angeordnet, die zum Freihalten des Spaltes an den Schrauben 67 dienen.

Durch die zentrale Ausnehmung 32 ist die am Boden abgeordnete Schraube 64 im Gehäuse erkennbar.

Die Schrägbohrungen 50 stehen luftführend mit Schrägbohrungen 69 in Verbindung, wie es in Figur 7 dargestellt ist.

Die Figur 9 und 10 zeigen das Ausführungsbeispiel eines Schnellspannzylinders nach Figur 3, wobei weitere Einzelheiten gezeigt sind. Beispielsweise ist dargestellt, dass der Einzugsnippel 3 mit einer Werkstückpalette 68 verbunden ist, wobei wiederum die verriegelte und entriegelte Stellung in zwei verschiedenen Halbschnitten dargestellt ist.

Aus der Figur 10 ergeben sich die Lage der gegenüberliegenden Anschlüsse, nämlich der Druckanschluss 11 im Vergleich zu dem Luftanschluss 44.

Ansonsten gelten für die gleichen Teile die gleichen Erläuterungen wie sie anhand der Figuren 7 und 8 gegeben wurden.

In Figur 11 ist ein weiteres Ausführungsbeispiel eines Schnellspannsystems in der Form eines Einbaumoduls 80 dargestellt, das in der Art einer Einbaukassette in einen Maschinentisch eingelassen ist. Wichtig ist, dass in die zentrale Aufnahme 73 im Maschinentisch 72 - die nicht hochgenau bearbeitet werden muss -das gesamte Einbaumodul 80 eingelassen ist. Es wird mit Hilfe der Schrauben 15 befestigt.

Kennzeichnend für dieses Ausführungsbeispiel ist, dass die untere Federauflage 6 werkstoffeinstückig mit einem Zylinderrohr 74 verbunden ist. Dadurch kann das Zylinderrohr 74 sehr leicht in die nur ungenau bearbeitete Aufnahme 73 im Maschinentisch 72 eingelassen werden, wobei die beiden Dichtungen 77, 77a die vollständige Abdichtung des Zylinderrohrs 74 in der Aufnahme 73 bewerkstelligen. Wichtig ist, dass die beiden Dichtungen 77, 77a einen gegenseitigen axialen Abstand voneinander einnehmen und den Druckölraum von dem Luftraum trennen. Über den Anschluss 11 wird das Druckmedium eingeführt und gelangt über einen Ringkanal 75 und eine Verbindungsbohrung 76 in den Zylinderraum 12, so dass der Kolben 4 entgegen der Kraft der Federn 7in seine Lösestellung bewegt werden kann.

Die obere Dichtung 77a verhindert ein Austreten des Druckmediums nach oben und die untere Dichtung 77 verhindert ein Übertreten des Druckmediums in den darunterliegenden Luftraum.

Der Luftraum 78 steht luftschlüssig mit dem Luftanschluss 44 in Verbindung, und mündet über eine Vielzahl von Quer- und S.chrägbohrungen in die zugeordneten Ausblasöffnungen. Beispielsweise ist der Luftraum 78 durch den Spalt 79 luftführend mit dem Innenraum des Gehäuses verbunden und von diesem Innenraum ausgehend reichen eine Reihe von Schräg- und Querbohrungen nach oben in Richtung auf die Kugelauflageflächen, auf die deckelseitigen Ausblasbohrungen und andere Teile.

Über eine zentrale, vertikal gerichtete Bohrung 109 wird die Luft in einer zugeordneten Schraube 110 in den zentralen Innenraum 30 des Gehäuses geführt. Der Luftraum 78 mündet im Übrigen in den ringsumlaufenden Ringkanal 81.

Von dem Ringkanal 81 ausgehend erstreckt sich der luftführende Spalt 79, über den die Druckluft in den Innenraum des Gehäuses geführt wird.

Bei diesem Einbaumodul 80 ist wesentlich, dass lediglich die Innenseite des Zylinderrohres 74 hochgenau bearbeitet werden muss, um den Kolben 4 zuverlässig zu führen. Das gesamte Einbaumodul 80 kann also als getrenntes Teil geliefert werden und wird in einer relativ ungenau bearbeiteten Aufnahme 73 im Maschinentisch 72 eingesetzt und arbeitet zuverlässig, weil die hochgenau zu bearbeitenden Teile im Innenraum des Einbaumoduls 80 angeordnet sind. Es handelt sich daher um eine besonders einfache und kostengünstige Montage eines solchen Einbaumoduls 80.

Man hat im Übrigen im Vergleich zu den vorher beschriebenen Ausführungsbeispielen ein weiteres Teil gespart, weil dass Zylinderrohr 74 werkstoffeinstückig mit der Federauflage 6 verbunden ist und damit gleichzeitig die Abdichtung zwischen dem Druckölraum und dem luftführenden Raum bewerkstelligt.

Die Figur 12 zeigt ein weiteres Ausführungsbeispiel eines Spannsystems, das mit einem Auswerferkolben 87 arbeitet. Es versteht sich von selbst, dass die Anordnung eines Auswerferkolbens 87 mit der dargestellten Drucköl- und Luftführung in jedem der vorher genannten Ausführungsbeispiele ebenso Anwendung finden kann. Das hier vorgestellte Ausführungsbeispiel ist also nicht auf das dargestellte Spannsystem beschränkt.

Wichtig ist, dass unterhalb des zentralen Innenraums und unterhalb des Verriegelungssystems der Auswerferkolben 87 angeordnet ist und in vertikaler Richtung (Pfeilrichtungen 88) verschiebbar angetrieben ist.

Zu diesem Zweck wird ein Druckmedium über den Druckanschluss 111 eingeführt, welches über die Fallbohrung 84 und einer radial einwärtsgerichteten Verbindungsnut 86 in den bodenseitigen Druckraum 85 eingeführt wird. Dadurch wird der Auswerferkolben 87 in Pfeilrichtung 88 nach oben angehoben.

Das Druckmedium wird über den Druckanschluss 82 in den zugeordneten Druckraum 83 eingeführt und an den Ringansatz 112 des Auswerferkolbens 87 herangeführt, so dass dieser in Pfeilrichtung 88 nach unten verschiebbar angetrieben wird. Der Auswerferkolben soll bei entferntem Einzugsnippel 3 die zentrale Innenausnehmung 30 des Spannsystems vor dem Eindringen von Verschmutzungen schützen. Wenn der Einzugsnippel 3 nach Figur 12 aus der zentralen Innenausnehmung 32 heraus gezogen ist, wird der Auswerferkolben 87 nach oben in Pfeilrichtung 88 bewegt und dichtet die zentrale Innenausnehmung 32 nach oben hin ab.

Befinden sich mehrere Spannsysteme mit zugeordneten Spannzylindern auf dem Maschinentisch und werden einige Spannsysteme nicht verwendet, so wird der Auswerferkolben 87 in seine nach oben gerichtete Abdichtstellung gefahren und dichtet die jeweiligen zentralen Ausnehmungen 32 im Gehäuse des Spannsystems ab.

Gleichzeitig hat der Auswerferkolben 87 noch den Vorteil, dass er zum Einführen von Einzugsnippeln geeignet ist, die mit sehr schweren Werkstückpaletten verbunden sind. Bei nach oben aus der zentralen Ausnehmung 32 ausgefahrenem Auswerferkolben 87 wird die Werkstüclcpalette mit dem darunter angeordneten Einzugsnippel auf die obere Stirnseite des Auswerferkolbens 87 aufgesetzt und dieser wird nun durch die entsprechende Druckölzuführung in Pfeilrichtung 88 nach unten gefahren, so dass der Einzugsnippel sehr sanft gesteuert in die zentrale Innenausnehmung 32 einfährt und Beschädigungen am Spannsystem oder Verriegelungssystem verhindert werden.

Gleichzeitig hat der Auswerferkolben 87 noch den weiteren Vorteil, dass wenn sich Späne oder sonstige Verschmutzungen im Innenraum auf der Stirnseite des Auswerferkolbens 87 ablagern, diese beim Ausfahren des Auswerferkolbens 87 sehr leicht entfernt werden können.

Für die Einführung eines Druckmediums über die Anschlüsse 82, 111 können beliebige Druckmedien verwendet werden.

Der Auswerferkolben 87 kann auch ohne Einwirkung eines Druckmediums unter Wirkung einer Feder verschieben werden.

Die Figuren 13 und 14 zeigen zwei miteinander verwandte Ausführungsbeispiele von Spannsystemen, die ebenfalls sehr einfach aufgebaut sind. Es werden damit niedrigste Einbauhöhen erzielt, weil auf Federpakete verzichtet wird und stattdessen die Verriegelung und die Entriegelung mit einem Druckmedium erfolgt.

Zu diesem Zweck sind an dem Einbaumodul 90 zwei voneinander getrennte Druckanschlüsse 93, 94 angeordnet; wobei der Druckanschluss 93 als Löseanschluss und der Druckanschluss 94 als kraftverstärkender Anschluss zur Verstärkung der Schließkraft der Verriegelungskugel 21 vorgesehen ist.

Die gleichmäßig verteilt am Umfang angeordneten Federn 95 erbringen die auf den Kolben 4 wirkende Verriegelungskraft, die durch die Einführung des Druckmediums über den Druckanschluss 94 in den Druckraum 96 verstärkt.

Die Entriegelung erfolgt durch Einführung eines Druckmediums in den Druckanschluss 93, wo das Druckmedium in den oberen Druckraum 97 eingeführt wird und den Verriegelungskolben 4 nach unten fährt.

Der einfache Aufbau und die niedrige Einbauhöhe illustrieren die Vorteile der vorliegenden Erfindung. Weil sich die Verriegelungskugeln 21 aufgrund ihrer Dreipunkt-Auflage selbsthemmend in Verriegelungsstellung befinden, genügen nur relativ geringe Hebekräfte auf den Kolben 4 um diese Verrieglungsstellung zu erreichen und auch beizubehalten. Daher können die Federn 85 sehr schwach dimensioniert werden.

Ein weiteres Merkmal dieser Ausführung ist, dass die untere Kugelauflage 91 gleichzeitig das Bodenteil 89 bildet und dieses Teil werkstoffeinstückig mit dem vorher erwähnten Zylinderrohr 74 verbunden ist. Hierdurch ergeben sich sehr wenig Teile, nämlich nur dieses Teil 89 in Verbindung mit dem Kolben 4 und dem Deckel 2 und der zugehörenden Verriegelungskugeln 21.

Die Kugelauflage 91 bildet die vorher beschriebenen Kugelbahnen 92 aus. Die Ausführungsform eines Aufbaumoduls 100 im Vergleich zu dem Einbaumodul 90 nach Figur 14 zeichnet sich dadurch aus, dass die Führung des Druckmediums anders gestaltet ist. Von dem Druckanschluss 94 ausgehend erstreckt sich eine vertikale Fallbohrung 98 nach unten, die über einen radialen Verbindungskanal 99 in den Druckraum 97 mündet.

Andererseits erstreckt sich von dem Druckanschluss 93 eine horizontale Bohrung 91 in den Druckraum 96.

Auch dieses Ausführungsbeispiel zeichnet sich durch das Vorhandensein weniger Teile bei geringer Einbauhöhe und absolut betriebssicherer Arbeitsweise aus.

Der Vorteil der vorliegenden Erfindung liegt insgesamt in der Verwendung einfach zu bearbeitender und kostengünstiger Drehteile, ohne dass es der aufwendigen Bearbeitung hochwertiger Werkzeugstähle bedarf, welche die Herstellungskosten sehr stark erhöhen. Es wird ein kompaktes Schnellspannsystem mit geringem Durchmesser und hohen Verriegelungskräften beschrieben, das betriebssicher arbeitet und in der Verriegelungsstellung einen absoluten Formschluss ergibt. Es ist deshalb nicht möglich, bei einem verriegelten System den Einzugsnippel über einem Totweg (von zum Beispiel 2 mm) herauszuziehen, was beim Stand der Technik in Kauf genommen werden musste.

### Zeichnungslegende

- 1: Rohrgehäuse
- 2: Decke
- 3: Einzugsnippel 3'
- 4: Kolben
- 5: Kugelauflage
- 6: Federauflage
- 7: Feder
- 8: Sperrkugel
- 9: Einstich
- 10: Gewindeansatz
- 11: Druckanschluss
- 12: Zylinderraum
- 13: Sachbohrung
- 14: Ringeinstich
- 15: Schraube
- 16: Spannring
- 17: Sicherungsring
- 18: Sicherungsring
- 19: Schraube
- 20: Ringeinstich
- 21: Verriegelungskugel
- 22: Position
- 23: Position
- 24: Position
- 25: Schräge (klein)
- 26: Schräge (groß)
- 27: Kugelhalterung (oben)
- 28: Schräge
- 29: Hebel
- 30: Innenraum

- 31: Pfeilrichtung
- 32: Ausnehmung
- 33: Freistellung
- 34: Kugelhalterung (unten)
- 35: Federauflagefläche (oben)
- 36: Federauflagefläche (unten)
- 37: Schräge
- 38: Nut
- 39: Radius (oben)
- 40: Radius (unten)
- 41: Verbindungsbohrung
- 42: Decke
- 43: Spalt
- 44: Luftanschluss
- 45: Steigbohrung
- 46: Schrägbohrung
- 47: Pfeilrichtung
- 48: Bohrung
- 49: Steigbohrung
- 50: Schrägkanal
- 51: Blasöffnung
- 52: Planeinstich
- 53: Schrägkanal
- 54: Horizontalkanal
- 55: Mittenöffnung
- 56: Fangschraube
- 57: Einbaumodul
- 58: Einbaumodul
- 59: Einbaumodul
- 60: Gewinde

- 61: Dichtung
- 62: Konusöffnung
- 63: Öffnung
- 64: Schraube
- 65: Dichtung
- 66: Blasbohrung
- 67: Schraube
- 68: Werkstückpalette 68'
- 69: Schrägbohrung
- 70: Einbaumodul
- 71: Schrägbohrung
- 72: Maschinentisch
- 73: Aufnahme
- 74: Zylinderrohr
- 75: Ringkanal
- 76: Verbindungsbohrung
- 77: Dichtung 77a
- 78: Luftraum
- 79: Spalt
- 80: Einbaumodul
- 81: Ringkanal
- 82: Druckanschluss (Auswerfer)
- 83: Druckraum
- 84: Fallbohrung
- 85: Druckraum
- 86: Verbindungsnut
- 87: Auswerferkolben
- 88: Pfeilrichtung
- 89: Bodenteil
- 90: Einbaumodul
- 91: Untere Kugelauflage
- 92: Kugelbahn
- 93: Löse-Druckanschluss
- 94: Druckanschluss
- 95: Feder
- 96: Druckraum (unten)
- 97: Druckraum (oben)
- 98: Fallbohrung
- 99: Verbindungskanal
- 100: Aufbaumodul
- 101: Bohrung
- 102: Hebelarm
- 103: Hebelarm
- 104: Ringansatz (Kolben 4)
- 105: Deckelansatz (Deckel 2)
- 106: Ringansatz
- 107: Kugelkanal
- 108: Durchbruch
- 109: Bohrung
- 110: Schraube
- 111: Druckeinschluss
- 112: Ringansatz

## Patentansprüche

1. Schnellspannzylinder bestehend aus einem Gehäuse (1) und einem das Gehäuse abdeckenden Deckel (2), der eine zentrale Ausnehmung (32) für die Aufnahme eines Einzugsnippels (3) bildet, der an der Unterseite einer Werkstückpalette (68) angeordnet ist, und im Gehäuse eine federbelastete Verriegelung des Einzugsnippels über mehrere Verriegelungskugeln (21) aufweist, wobei sich die Verriegelungskugeln (21) in der Verriegelungsstellung federbelastet an den Außenumfang des Einzugnippels (3) anlegen und sich in die entriegelte Stellung durch Verschiebung eines druckmittelbetätigten Kolbens (4) außer Eingriff mit dem Einzugnippel verschieben, **dadurch gekennzeichnet, dass** die Verriegelungskugeln (21) mit einer Hebelarm-Übersetzung die von den Federn (7) ausgeübte Federkraft in ein Vielfaches der Einzugskraft auf den Einzugsnippel (3) umsetzen, wobei der Kolben (4) eine radial einwärts gerichtete, schwach geneigte Schräge (25) aufweist, an der Verriegelungskugeln (21) in einer Verriegelungsstellung lastübertragend in einer ersten Kugelposition (24) anliegen, die sich ferner mit einer weiteren Kugelposition (22) an der Unterseite des Deckels (2) und mit einer dritten Kugelposition (23) an einer entgegengesetzt gerichteten Schräge (28) am Außenumfang des Einzugsnippels (3) anlegen, wobei die Schräge (25) am Kolben (4) eine Neigung unterhalb der Selbsthemmung insbesondere kleine 7 Grad ausbildet.

2. Schnellspannzylinder nach Anspruch 1, **dadurch gekennzeichnet, dass** der Kolben (4) zwischen Flächen des Deckels (2) und des Gehäuses (1) verschiebbar und abdichtend geführt ist.

3. Schnellspannzylinder nach einem der Ansprüche 1 bis 2, **dadurch gekennzeichnet, dass** der von Verriegelungskugeln (21) beaufschlagte Teil des Kolbens (4) als biegbarer Ringansatz (104) ausgebildet ist.

4. Schnellspannzylinder nach einem der Ansprüche 1 bis 3, **dadurch gekennzeichnet, dass** sich die Außenseite des Kolbens (4) mit Dichtringen abdichtend an einem freitragenden Deckelansatz (105) des Deckels (2) anlegt.

5. Schnellspannzylinder nach einem der Ansprüche 1 bis 4, **dadurch gekennzeichnet, dass** jede Feder (7) radial auswärts an einer radial auswärtsgerichteten, oberen Federauflagefläche 35 an der Unterseite des Kolbens (4) und auf einer radial auswärtsgerichteten unteren Federauflagefläche (36) der Federauflage (6) aufliegt.

6. Schnellspannzylinder nach Anspruch 5, **dadurch gekennzeichnet, dass** die radial auswärtsgerichtete, obere Federauflage 35 ungefähr fluchtend unterhalb eines Zylinderraums (12) befindet, so dass der Zylinderraum (12) beim Lösen der Verriegelung nicht verformt wird.

7. Schnellspannzylinder nach einem der Ansprüche 5 oder 6, **dadurch gekennzeichnet, dass** die untere Federauflage (6) und damit die gesamte Verriegelungsvorrichtung mit Hilfe von gleichmäßig verteilt am Umfang angeordneten Sperrkugeln (8) in das Rohrgehäuse (1) des Spannsystems eingepasst und dort gehalten ist.

8. Schnellspannzylinder nach einem der Ansprüche 1 bis 7, **dadurch gekennzeichnet, dass** ein kleinvolumiger Zylinderraum (12) durch die Gegenüberstellung eines Deckelansatzes (105) im Deckel (2) und durch eine Abkröpfung im Kolben (4) vorhanden ist.

9. Schnellspannzylinder nach einem der Ansprüche 1 bis 8, **dadurch gekennzeichnet, dass** der Zylinderraum (12) radial auswärts in dem Rohrgehäuse (1) angeordnet ist und zwar in die Nähe der radial auswärts angeordneten Schrauben (19) zwischen dem Deckel (2) und dem Rohrgehäuse (1), so dass eventuelle auf den Deckel (2) einwirkende Verformungskräfte von den Schrauben (19) aufgenommen werden.

10. Schnellspannzylinder nach Anspruch 9, **dadurch gekennzeichnet, dass** der Übergangsbereich im Deckel (2) zwischen dem nach unten verlängerten Deckelansatz (105) zur Führung des Kolbens (4) und dem Bereich des Deckels (2), durch welches die Schrauben (19) hindurchgreifen, hochlastübertragend und gegen Verformungen geschützt ausgebildet ist.

11. Schnellspannzylinder nach einem der Ansprüche 9 oder 10, **dadurch gekennzeichnet, dass** der Deckel (2) im vom verlängerten Deckelansatz (105) gesehen radial einwärts gerichteten Bereich eine geringere geringe Materialstärke aufweist.

12. Schnellspannzylinder nach einem der Ansprüche 1 bis 11, **dadurch gekennzeichnet, dass** sich am Kolben (4) an die schwach geneigte Schräge (25) in axialer Richtung in eine stärker geneigte, größere Schräge (26) anschließt.

13. Schnellspannzylinder nach einem der Ansprüche 1 bis 12, **dadurch gekennzeichnet, dass** der Einzugsnippel (3) mit einer konischen Spitze in den zentralen Innenraum 30 im Spannzylinder eingreift und sich dort in einer entgegengesetzt konischen Ausnehmung zentriert.

14. Schnellspannzylinder nach einem der Ansprüche 1 bis 12, **dadurch gekennzeichnet, dass** die Ausblasluft über einen Luftanschluss (44) in ein Rohrgehäuse (1) eingeleitet wird und dort über eine vertikale Steigbohrung in den unteren Bereich des Rohrgehäuses (1) gelangt, wo sie in einen umlaufenden Einstich (9) gelangt.

15. Schnellspannzylinder nach Anspruch 14, **dadurch gekennzeichnet, dass** die Ausblasluft zwischen der Unterseite einer Federauflage (6) und der Innenseite des Deckels (42) einen etwa den gesamten bodenseitigen Durchmesser des Gehäuses bildenden Spalt (43) durchströmt und mit einem ersten Luftführungsweg über den am Außenumfang angeordneten Einstich (9) in den Außenbereich und über einen zweiten Luftführungsweg in den zentralen Innenbereich des Spannsystems verzweigt.

16. Schnellspannsystem mit einem Schnellspannzylinder nach einem der Ansprüche 14 oder 15, **dadurch gekennzeichnet, dass** die Ausblasluft einen schräg gegen die Unterseite der Verriegelungskugeln (21) gerichteten Luftstrom erzeugt, der die Verriegelungskugeln drehend antreibt und in Umfangsrichtung um den Einzugsnippel herum laufen lässt.

17. Schnellspannsystem mit einem Schnellspannzylinder nach einem der Ansprüche 1 bis 16, **dadurch gekennzeichnet, dass** der Einzugnippel (3) mit einer Fangschraube (56) verbunden ist, die mit einer Fangeinrichtung an einem Hubkolben (87) des Spannsystems zusammenwirkt, welche den aus der zentralen Ausnehmung des Spannsystems entfernten Einzugsnippel fängt und in das Spannsystem einzieht.

18. Schnellspannsystem mit einem Schnellspannzylinder nach einem der Ansprüche 1 bis 17, **dadurch gekennzeichnet, dass** die Kugelauflage (5) mit der Federauflage (6) ein miteinander verbundenen sind und ein Einbaumodul (57, 58, 59) bilden, das die Federn (7) einspannt.

19. Schnellspannsystem mit einem Schnellspannzylinder nach einem der Ansprüche 1 bis 18, **dadurch gekennzeichnet, dass** das Schnellspannsystems als Einbaumodul (80) in der Art einer Einbaukassette in einen Maschinentisch eingelassen ist.

20. Schnellspannsystem mit einem Schnellspannzylinder nach Anspruch 19, **dadurch gekennzeichnet, dass** die untere Federauflage (6) werkstoffeinstückig (ein Teil bildend) mit einem Zylinderrohr (74) zur Ausbildung des Zylinders für die Führung des Kolbens (4) verbunden ist.

## Claims

1. Quick-action clamping cylinder consisting of a housing (1) and a cover (2) which covers the housing and forms a central recess (32) for receiving an insert nipple (3) arranged on the underside of a workpiece pallet (68) and has, in the housing, a spring-loaded means for locking the insert nipple by way of a plurality of locking balls (21), the locking balls (21) being positioned in a spring-loaded manner, in the locking position, against the outer circumference of the insert nipple (3) and being disengaged from the insert nipple, in the unlocked position, by displacement of a piston (4) actuated by a pressure medium, **characterised in that** the locking balls (21) convert the spring force exerted by the springs (7) into a multiple of the insertion force acting on the insert nipple (3), by means of a lever arm transmission, the piston (4) having a radially inwardly oriented, slightly inclined bevel (25) against which there are positioned in a load-transmitting manner, in a first ball position (24), locking balls (21) in a locking position which are also positioned, in a further ball position (22), against the underside of the cover (2) and, in a third ball position (23), against an opposing bevel (28) on the outer circumference of the insert nipple (3), the bevel (25) on the piston (4) forming an inclination below self-locking, in particular less than 7 degrees.

2. Quick-action clamping cylinder according to claim 1, **characterised in that** the piston (4) is guided in a displaceable and sealing manner between faces of the cover (2) and the housing (1).

3. Quick-action clamping cylinder according to either claim 1 or claim 2, **characterised in that** the portion of the piston (4) that is acted on by locking balls (21) is formed as a flexible annular shoulder (104).

4. Quick-action clamping cylinder according to any one of claims 1 to 3, **characterised in that** the outside of the piston (4) is positioned against a self-supporting shoulder (105) of the cover (2) with a seal produced using ring seals.

5. Quick-action clamping cylinder according to any one of claims 1 to 4, **characterised in that** each spring (7) rests radially outwardly against a radially outwardly oriented upper spring support face (35) at the underside of the piston (4) and on a radially outwardly oriented lower spring support face (36) of the spring support (6).

6. Quick-action clamping cylinder according to claim 5, **characterised in that** the radially outwardly oriented upper spring support (35) is approximately aligned below a cylinder chamber (12), so the cylinder chamber (12) is not deformed on release of the locking.

7. Quick-action clamping cylinder according to either claim 5 or claim 6, **characterised in that** the lower spring support (6), and therefore the entire locking device, is introduced into the tubular housing (1) of the clamping system, and held therein, using locking balls (8) distributed uniformly over the circumference.

8. Quick-action clamping cylinder according to any one of claims 1 to 7, **characterised in that** a small-volume cylinder chamber (12) is provided by the opposition of a cover shoulder (105) in the cover (2) and by a bend in the piston (4).

9. Quick-action clamping cylinder according to any one of claims 1 to 8, **characterised in that** the cylinder chamber (12) is arranged radially outwardly in the tubular housing (1), in proximity to the radially outwardly arranged bolts (19) between the cover (2) and the tubular housing (1), so any deformation forces acting on the cover (2) are absorbed by the bolts (19).

10. Quick-action clamping cylinder according to claim 9, **characterised in that** the region of transition in the cover (2) between the downwardly extended cover shoulder (105) for guiding the piston (4) and the region of the cover (2) through which the bolts (19) pass is configured so as to transmit high loads and be protected against deformations.

11. Quick-action clamping cylinder according to either claim 9 or claim 10, **characterised in that** the cover (2) has in the radially inwardly oriented region, viewed from the extended cover shoulder (105), a reduced low material thickness.

12. Quick-action clamping cylinder according to any one of claims 1 to 11, **characterised in that**, on the piston (4), a larger, more markedly inclined bevel (26) is connected to the slightly inclined bevel (25) in the axial direction.

13. Quick-action clamping cylinder according to any one of claims 1 to 12, **characterised in that** a conical tip of the insert nipple (3) engages with the central internal chamber (30) of the clamping cylinder, where it is centred in a recess of opposing conicity.

14. Quick-action clamping cylinder according to any one of claims 1 to 12, **characterised in that** the expelled air is introduced via an air connection (44) into a tubular housing (1), and there passes via a vertical rising bore into the lower region of the tubular housing (1), where it passes into a peripheral groove (9).

15. Quick-action clamping cylinder according to claim 14, **characterised in that** the air expelled between the underside of a spring support (6) and the inside of the cover (42) streams through a gap (43) forming substantially the entire base-side diameter of the housing and branches, by way of a first air conduit, via the groove (9) arranged on the outer circumference into the outer region and, via a second air conduit, into the central inner region of the clamping system.

16. Quick-action clamping system comprising a quick-action clamping cylinder according to either claim 14 or claim 15, **characterised in that** the expelled air generates an air stream which is oriented obliquely to the underside of the locking balls (21), drives the locking balls in rotation and can be passed around the insert nipple in the circumferential direction.

17. Quick-action clamping system comprising a quick-action clamping cylinder according to any one of claims 1 to 16, **characterised in that** the insert nipple (3) is connected to a catch screw (56) which cooperates with a catch means on a reciprocating piston (87) of the clamping system, which means catches the insert nipple removed from the central recess in the clamping system and introduces it into the clamping system.

18. Quick-action clamping system comprising a quick-action clamping cylinder according to any one of claims 1 to 17, **characterised in that** the ball support (5) and the spring support (6) are joined together and form an inbuilt module (57, 58, 59) which fixes the springs (7).

19. Quick-action clamping system comprising a quick-action clamping cylinder according to any one of claims 1 to 18, **characterised in that** the quick-action clamping system, as the inbuilt module (80), is introduced into a work bench in the manner of an inbuilt cartridge.

20. Quick-action clamping system comprising a quick-action clamping cylinder according to claim 19, **characterised in that** the lower spring support (6) is connected to a cylinder tube (74) in a materially integral manner (forming one part) so as to form the cylinder for guiding the piston (4).

## Revendications

1. Cylindre de serrage rapide composé d'une enveloppe (1) et d'un couvercle (2) qui couvre celle-ci, qui forme un creux central (32) pour recevoir un embout (3) disposé sur le côté inférieur d'une palette de pièces (68) et qui comporte dans l'enveloppe un verrouillage à ressort de l'embout grâce à plusieurs billes de verrouillage (21), étant précisé que les billes de verrouillage (21), en position verrouillée, s'appliquent sous la contrainte d'un ressort contre la circonférence extérieure de l'embout (3), et se déplacent vers la position déverrouillée grâce à un déplacement d'un piston (4) actionné par un moyen de pression, pour être désolidarisées de l'embout (3), **caractérisé en ce que** les billes de verrouillage (21), grâce à une transmission par bras de levier, transforment la force élastique exercée par les ressorts (7) en un multiple de la force d'introduction sur l'embout (3), étant précisé que le piston (4) présente un biseau (25) légèrement incliné dirigé radialement vers l'intérieur, contre lequel les billes de verrouillage (21), dans une position verrouillée, sont appliquées avec une transmission de charge dans une première position de billes (24) tandis que dans une autre position (22), elles s'appliquent contre le côté inférieur du couvercle (2) et qu'avec une troisième position (23), elles s'appuient contre un biseau (28), dirigé à l'opposé, de la circonférence extérieure de l'embout (3), le biseau (25) du piston (4) formant une partie inclinée située juste au-dessous de la limite d'autoblocage, notamment de moins de 7 degrés.

2. Cylindre de serrage rapide selon la revendication 1, **caractérisé en ce que** le piston (4) est guidé, mobile et étanche, entre les surfaces du couvercle (2) et de l'enveloppe (1).

3. Cylindre de serrage rapide selon la revendication 1 à 2, **caractérisé en ce que** la partie du piston (4) qui est contrainte par les billes de verrouillage (21) est conçue comme une saillie annulaire flexible (104).

4. Cylindre de serrage rapide selon l'une des revendications 1 à 3, **caractérisé en ce que** le côté supérieur du piston (4) s'applique de manière étanche, avec des bagues d'étanchéité, contre une saillie en porte-à-faux (105) du couvercle (2).

5. Cylindre de serrage rapide selon l'une des revendications 1 à 4, **caractérisé en ce que** chaque ressort (7) est posé radialement vers l'extérieur contre une surface de support de ressort supérieure (35), dirigée radialement vers l'extérieur, du côté inférieur du piston (4) et sur une surface de support de ressort inférieure (36), dirigée radialement vers l'extérieur, du support de ressort (6).

6. Cylindre de serrage rapide selon la revendication 5, **caractérisé en ce que** le support de ressort supérieur (35) dirigé radialement vers l'extérieur se trouve à peu près dans l'alignement d'un espace cylindrique (12), au-dessous de celui-ci, de sorte que l'espace cylindrique (12) n'est pas déformé lors de la suppression du verrouillage.

7. Cylindre de serrage rapide selon la revendication 5 ou 6, **caractérisé en ce que** le support de ressort inférieur (6) et, ainsi, tout le dispositif de verrouillage sont enfoncés et maintenus dans l'enveloppe tubulaire (1) du système de serrage à l'aide de billes de blocage (8) réparties régulièrement sur la circonférence.

8. Cylindre de serrage rapide selon l'une des revendications 1 à 7, **caractérisé en ce qu'**un espace cylindrique (12) de petit volume est défini par une saillie (105) du couvercle (2) et, en face de celle-ci, une partie coudée du piston (4).

9. Cylindre de serrage rapide selon l'une des revendications 1 à 8, **caractérisé en ce que** l'espace cylindrique (12) est disposé radialement vers l'extérieur dans l'enveloppe tubulaire (1), à proximité des vis (19) disposées radialement vers l'extérieur entre le couvercle (2) et l'enveloppe (1), de sorte que les forces de déformation agissant éventuellement sur le couvercle (2) sont reçues par les vis (19).

10. Cylindre de serrage rapide selon la revendication 9, **caractérisé en ce que** la zone de transition du couvercle (2) entre la saillie de couvercle (105) prolongée vers le bas et destinée à guider le piston (4), et la zone du couvercle (2) traversée par les vis (19) est conçue pour transmettre une charge élevée et pour être protégée des déformations.

11. Cylindre de serrage rapide selon la revendication 9 ou 10, **caractérisé en ce que** le couvercle (2) présente dans la zone dirigée radialement vers l'extérieur, vue de sa saillie prolongée (105), une épaisseur de matière faible.

12. Cylindre de serrage rapide selon l'une des revendications 1 à 11, **caractérisé en ce qu'**il est prévu dans le sens axial sur le piston (4), à la suite du biseau (25) faiblement incliné, un biseau (26) plus grand et plus fortement incliné.

13. Cylindre de serrage rapide selon l'une des revendications 1 à 12, **caractérisé en ce que** l'embout (3) pénètre avec une pointe conique dans l'espace intérieur central (30) du cylindre de serrage, où il se centre dans un creux conique opposé.

14. Cylindre de serrage rapide selon l'une des revendications 1 à 12, **caractérisé en ce que** l'air de soufflage est introduit dans une enveloppe tubulaire (1) par un raccordement d'air (44) et, de là, arrive par un perçage montant vertical dans la zone inférieure de l'enveloppe (1), où il arrive dans une encoche circulaire (9).

15. Cylindre de serrage rapide selon la revendication 14, **caractérisé en ce que** l'air de soufflage s'écoule entre le côté inférieur d'un support de ressort (6) et le côté intérieur du couvercle (42) à travers un interstice (43) qui définit à peu près tout le diamètre, côté fond, de l'enveloppe, et se ramifie avec une première trajectoire d'air dans la zone extérieure, par l'intermédiaire de l'encoche (9) disposée sur la circonférence extérieure, et avec une seconde trajectoire dans la zone intérieure centrale du système de serrage.

16. Système de serrage rapide comportant un cylindre de serrage rapide selon la revendication 14 ou 15, **caractérisé en ce que** l'air de soufflage produit un courant d'air qui est dirigé en biais vers le côté inférieur des billes de verrouillage (21) et qui entraîne celles-ci en rotation et les fait rouler dans le sens circonférentiel autour de l'embout.

17. Système de serrage rapide comportant un cylindre de serrage rapide selon l'une des revendications 1 à 16, **caractérisé en ce que** l'embout (3) est relié à une vis d'arrêt (56) qui coopère avec un dispositif d'arrêt sur un piston alternatif (87) du système de serrage, lequel dispositif d'arrêt arrête l'embout enlevé du creux central du système de serrage et l'enfonce dans celui-ci.

18. Système de serrage rapide comportant un cylindre de serrage rapide selon l'une des revendications 1 à 17, **caractérisé en ce que** le support de billes (5) et le support de ressort (6) sont reliés et forment un module de montage (57, 58, 59) pour les ressorts (7)

19. Système de serrage rapide comportant un cylindre de serrage rapide selon l'une des revendications 1 à 18, **caractérisé en ce qu'**il est introduit dans une table de machine-outil sous la forme d'un module de montage (80) à la manière d'une cassette de montage.

20. Système de serrage rapide comportant un cylindre de serrage rapide selon la revendication 19, **caractérisé en ce que** le support de ressort inférieur (6) est venu de matière (en formant une seule pièce) avec un tube cylindrique (74) pour former le cylindre pour le guidage du piston (4).
